# EUROPEAN PATENT SPECIFICATION

(11) **EP 2 385 028 B1**
(45) Date of publication and mention of the grant of the patent: **09.04.2014**
(21) Application number: 10161719.9
(22) Date of filing: 03.05.2010
(51) Int. Cl.: C04B 28/04, C04B 111/00, C04B 26/26

(54) **Use of crushed ceramic aggregates coming from baked ceramic reject recovery processes for the preparation of concrete, bituminous conglomerates, cementitious conglomerates and relative conglomerate derivatives having different formulations**
Verwendung von zerbrochenen Keramikzuschlägen aus Verfahren zur Wiedergewinnung von gebranntem Keramikausschuss zur Herstellung von Beton, Bitumenkonglomeraten, zementartigen Konglomeraten und entsprechenden Konglomeratderivaten mit verschiedenen Formulierungen
Utilisation d'agrégats de céramique broyés provenant de processus de récupération des rejets de céramique pour la préparation de béton, conglomérats bitumineux, conglomérats cimentaires et dérivés de conglomérats correspondants de formulations différentes

(43) Date of publication of application: 09.11.2011
(60) Divisional application: 13164833.9
(73) Proprietor: Cattalini, Mariella, 42030 Villa Minozzo (RE) (IT)
(72) Inventor: Cottafava, Massimo, 41049 Sassuolo - Modena (IT)
(74) Representative: Martegani, Franco

(56) References cited:
- WO-A2-2006/003466
- CN-B- 101 654 347
- JP-A- 2001 303 506
- JP-A- 2004 346 580
- RU-C1- 2 103 242
- BININCI H: "Effect of crushed and basaltic pumice as fine aggregates on concrete mortars properties" CONSTRUCTION AND BUILDING MATERIALS, ELSEVIER LNKD- DOI:10.1016/J.CONBUILDMAT.2006.06.002, vol. 21, no. 6, 1 January 2007 (2007-01-01), pages 1191-1197, XP002550017 ISSN: 0950-0618 [retrieved on 2006-08-17]
- SENTHAMARAI R M ET AL: "Concrete with ceramic waste aggregates" CEMENT & CONCRETE COMPOSITES,, vol. 27, no. 9-10, 1 October 2005 (2005-10-01), pages 910-913, XP002550018 [retrieved on 2005-06-13]

## Description

The present invention relates to the use of crushed ceramic aggregates coming from baked ceramic reject recovery process for the preparation of bituminous conglomerates and conglomerate derivatives having different formulations.

Inert aggregates are a component of base materials used for the production of concrete, bituminous conglomerate, cementitious conglomerates suitable for civil engineering works. Inert products are also used for producing reliefs, sub-bases, infills, foundations, in addition to environmental restoration works.

The increasing consumption on a world scale of inert products and the growing attention of society towards environmental problems make the traditional removal of these from natural quarries and river beds increasingly more difficult and inconvenient from an economic point of view.

In recent years, this situation has induced operators in the field to look for alternative supply sources of these raw materials, such as for example debris from constructions and the demolition of building products, waste from smelting processes, asphalt coming from milling scarifications, etc. The recycling of these waste products, in fact, allows economic and environmental benefits to be obtained, firstly thanks to the reduction in the production of waste destined for disposal and secondly the considerable saving of tradition quarry material.

In order to be able to effectively re-used in the above technological fields, the recycled inert products must has specific technical characteristics, generally defined by sector regulations (national and international). These regulations specify requisites, such as the dimension, form and hardness of the aggregates, for use as inert materials. In conformance with the sector regulations, producers of inert materials must therefore guarantee adequate cleanliness levels of the materials, i.e. no contamination by undesired substances, homogeneity of the composition and particle-size, specific water absorption capacities. For this purpose, the recycling processes of recovered materials comprise mechanical grinding, sieving treatment and elimination of the impurities.

In spite of the growing recycling activity of inert products of various kinds and origin, the quantity of recycled materials available on the whole is far from satisfying the field demands and the necessity is therefore strongly felt for finding further supply sources of materials als of this type.

In the field of the preparation of cementitious and bituminous conglomerates, the use of recovered inert aggregates also has specific problems. Witch respect to traditional inert quarry products, recovered inert materials can have particular chemical, physical and mechanical characteristics which make the formulation of the conglomerate mixtures quite complex. Account must be taken for example of the chemical compatibility of the amalgam of recovered inert materials with bituminous or hydraulic binders and/or the relative physico-mechanical characteristics, which must enable the end-product to provide adequate performances. The problem of preparing formulations capable of satisfying the requisites required by the standards of the sector is particularly felt in the case of the preparation of bituminous conglomerates for the production of street paving, especially for the production of surface wear pavements, where the bituminous conglomerates must have particular characteristics of stability, adherence, resistance to wear and atmospheric agents.

JP-2001-303506 discloses a bituminous conglomerate for the production of street paving comprising: inert material comprising crushed ceramic aggregates coming from recovery process of baked ceramic rejects and road tar.
Further CN101654347 discloses ARA regenerating agents to be used in an amount from 0 to 10% by weight in mixtures containing recycled asphalt to be used for road surfaces.

An objective of the present invention is to overcome the drawbacks indicated by the state of the art.

The object of the present invention therefore relates to a bituminous conglomerate for the production of street paving comprising:
a) a mixture of inert materials comprising crushed ceramic aggregates coming from recovery process of baked ceramic rejects;
b) road tar, wherein the road tar is present in a quantity ranging from 3 to 9% by weight of the total inert aggregates present;
c) a tar regenerating adhesion activating agent, wherein the regenerating adhesion activating agent is present in a quantity ranging from 0.4 to 0.5% by weight with respect to the weight of the tar.

The crushed ceramic aggregates which can be used for the purposes of the present invention are obtained through crushing, grinding and sieving operations of baked ceramic rejects of various origins.

Baked ceramic rejects refer to residues of ceramic products, of any form and dimension, such as tiles, stoneware, etc., which have generally reached the end of their functional cycle.

Considering their origin, geometrical form and dimensions, ceramic rejects are extremely heterogeneous. Ceramic rejects are generally in the form of flat fragments, i.e. fragments in which one of the dimensions (thickness) is much lower than the other two (height and width). Through grinding operations in specific form-correcting mills, the dimensions of the aggregates are made homogeneous, i.e. the starting ceramic rejects are reduced to crushed ceramic aggregates having dimensions lower than 40 mm.

Considering the advantages, in particular environmental, that the disclosed crushed ceramic aggregates obtaine, the Applicant has decided to identify the future commercial product with the name "ECOCER".

Processes for the preparation of crushed ceramic aggregates also comprise cleaning and washing treatment for the removal of the various kinds of impurities originally existing (for example, metallic, plastic parts, polystyrene, packaging, etc.).

The crushing, grinding, sieving, cleaning and washing operations can be effected according to the techniques and with the equipment known to experts in the field.

The cementitious conglomerates comprising crushed ceramic aggregates can be used for the production of concrete end-products for various types of application and, in particular, for the production of road foundations.

The cement is preferably present in the cementitious conglomerate in a quantity equal to 5% by weight with respect to the weight of the mixture of crushed ceramic aggregates. The cement is preferably a cement of type II, even more preferably a cement of type II/A-M 32.5R.

The water is preferably present in the cementitious conglomerate in a quantity equal to 8% by weight with respect to the weight of the mixture of crushed ceramic aggregates.

In a cementitious conglomerate, the crushed ceramic aggregates consist of a single granulometric fraction classified as G_{A}85 according to the regulation UNI EN 12620.

The mixture of crushed ceramic aggregates composed of the above single granulometric fraction is also indicated hereafter as base mixture.

The physico-mechanical characteristics of the base mixture make this mixture classifiable as belonging to group A1ₐ- according to the regulation CNR-UNI 10006/63.

Other characteristics of the base mixture are the following:
- the volumic mass of the aggregates (measured according to UNI EN 1097-6) is about 2.38 Mg/m³,
- the content of fine products (measured according to the regulation UNI EN 9331) is equal to about 5.6% by weight with respect to the weight of the base mixture,
- the fragmentation resistance index according to the Los Angeles test (UNI EN 1097-2) is equal to 25,
- the water absorption (UNI EN 1097-6) is equal to about 2.09% by weight with respect to the weight of the base mixture.

The above base mixture is also characterized by release levels of washing substances (leaching test IRSA CNR 1994) below the limits admitted by national and international regulations, in particular with respect to the limits established by the Ministerial Decree of February 5^{th} 1998 (annex 3).

Thanks to these physico-chemical characteristics, the crushed ceramic aggregates of the base mixture which can be used for the purposes of the present invention are particularly suitable for the preparation of bituminous conglomerates with a low environmental impact. Furthermore, the mechanical properties of the end-products produced with the disclosed cementitious conglomerate are characterized by performances analogous to those of the end-products constructed with conventional cementitious conglomerates.

The crushed ceramic aggregates which can be used for the purposes of the present invention are also suitable for the preparation of bituminous conglomerates for the construction of street paving.

The mixture of inert materials also comprises recycled asphalt (so-called milled product).

In the bituminous conglomerates according to the present invention, the crushed ceramic aggregates can form the whole of the inert aggregates or they can be a component of the mixture of inert materials, being mixed with conventional aggregates coming from quarries or river beds. The quantity of crushed ceramic aggregates in the bituminous conglomerate varies from 0.1% to 100% by weight with respect to the weight of the overall inert materials present.

In particular, the crushed ceramic aggregates are suitable for forming the aggregates present in the mixture of inert materials in the case of bituminous conglomerates to be used for the construction of surface wear pavements for street paving, preferably together with a recycled asphalt component (milled product).

The selection of the specific granulometric fractions of the crushed ceramic aggregates is of fundamental importance for obtaining an optimum granulometric curve for the production of a surface wear pavement.

Some specific granulometric fractions according to the present invention are, on the other hand, suitable for the production of bituminous conglomerates for the production of connection layers and base layers of street paving.

When the crushed ceramic aggregates according to the present invention are used in a mixture with conventional aggregates (aggregates from quarries or coming from river beds), the conventional aggregates are present in a variable quantity of up to 99.9% by weight with respect to the weight of the overall inert materials present.

In the bituminous conglomerates object of the present invention, the road tar is present in a quantity varying from 3 to 9% by weight with respect to the weight of overall inert materials present. The road tar can also be modified road tar.

Considering the particular smoothness (glazed) of at least one side of the material which forms the crushed baked ceramic aggregate and the oxidation of the tar present in the recycled asphalt mixture, in order to obtain a good binding action on the part of the tar, the presence in the conglomerate of a regenerating adhesion activating compound of tar is necessary, in a quantity varying from 0.4 to 0.5% by weight with respect to the weight of the tar.

In order to increase the roughness and adherence of the wear surfaces produced with mixtures of bituminous conglomerate according to the present invention, the formulation of the mixture preferably comprises recycled asphalt (also called milled asphalt).

Recycled or milled asphalt is a bituminous conglomerate deriving from scarification operations of road pavements with the use of specific milling machines.

The recycled or milled asphalt is present in the bituminous conglomerate according to the present invention in a quantity ranging from 5 to 35%, more preferably from 5 to 12.5% by weight with respect to the weight of the overall inert materials present for conglomerates suitable for the construction of surface wear pavements, preferably from 5 to 35% by weight with respect to the weight of overall inert materials present for conglomerates for the construction of connection and base layers.

The fillers and regenerating adhesion activating agents of the tar which can be used for the purposes of the present invention are those normally adopted in the field of the preparation of bituminous conglomerates. The filler is preferably present in the mixture of inert materials in a quantity varying from 3 to 10% by weight with respect to the weight of overall inert materials present.

In a preferred embodiment, a bituminous conglomerate suitable for the production of surface wear pavements for street paving comprises:
the following aggregates I-IV (weight percentages referring to the total weight of components I-IV), as component a) :
   I) 50-60% of crushed ceramic aggregates having dimensions of less than 4 mm;
   II) 30-40% % of crushed ceramic aggregates having dimensions varying from 4 to 8 mm;
   III) 5-12.5% of recycled asphalt;
   IV) 5%-8% by weight of filler
      in a mixture with
   V) 6.5%-8% by weight of road tar referring to the total weight of components I)-IV), as component b);
   VI) 0.4-0.5% by weight of regenerating adhesion activating agent of the tar referring to the weight of component V), preferably 0.4% by weight, as component c).
In a second embodiment, the crushed ceramic aggregates coming from recovery processes of baked ceramic rejects are used for the preparation of a bituminous conglomerate suitable for the construction of connection layers (also called binders) and base layers (also called toutvenants). In these conglomerates, a part of the natural quarry aggregates is substituted with selected fractions of crushed ceramic aggregates. In particular, the following granulometric fractions are used:
- granulometric fraction having dimensions of less than 4 mm (sand),
   - granulometric fraction having dimensions varying from 4 to 8 mm (4/8 granulate) and
   - granulometric fraction having dimensions varying from 8 to 12 mm (8/12 granulate).

The bituminous conglomerate suitable for the production of connection layers and base layers preferably comprises:
the following aggregates I-IV (weight percentages referring to the total weight of components I-IV), as component a):
   I) 10-45% of crushed ceramic aggregates comprising granulometric fractions i) having dimensions of less than 4 mm, ii) having dimensions varying from 4 to 8 mm and iii) having dimensions varying from 8 to 12 mm;
   II) 30-35% of recycled asphalt;
   III) 10-60% of quarry aggregates;
   IV) 3%-8% of filler
      in a mixture with
   V) 3.5%-5% by weight of road tar referring to the total weight of components I)-IV), as component b);
   VI) 0.4-0.5% by weight of regenerating adhesion activating agent of the tar referring to the weight of component V), preferably 0.4% by weight, as component c).

The bituminous conglomerates object of the invention have high mechanical characteristics and stability (Marshall), also under conditions of prolonged wear.

Of fundamental importance for obtaining high-quality bituminous conglomerates is the specific selection of the granulometric fractions of the crushed ceramic aggregates.

The bituminous conglomerates obtained with the use of inert materials comprising the crushed ceramic aggregates of the present invention also have high performance characteristics, comparable to those of conventional materials and at a much lower cost. The presence of ceramic aggregates in the bituminous conglomerates used for the production of surface wear pavements also offers the additional advantage of improving the road visibility in the case of darkness or fog. As the recovered ceramic rejects also comprise glazed ceramics, in fact, the crushed ceramic aggregates used as inert materials in the upper layers of the wear surface can reflect the light coming from the light beams of the car headlights, thus contributing to improving the driving visibility conditions of car drivers.

The following embodiment examples are provided for purely illustrative purposes of the present invention and should not be considered as limiting the protection scope defined in the enclosed claims.

### EXAMPLE 1 (Reference)

A cementitious conglomerate was prepared starting from a mixture of fragmented ceramic aggregates containing a single granulometric fraction classified as GA85 according to the regulation UNI EN 12620 (base mixture).

The mixture has the following characteristics:
- belonging to group A1-a according to the regulation CNR-UNI 10006/63),
- the volumic mass of aggregates (measured according to UNI EN 1097-6 was equal to 2.38 Mg/m³,
- the content of fine products (measured according to the regulation UNI EN 9331) was equal to 5.6% by weight of the base mixture,
- the fragmentation resistance index according to the Los Angeles test (UNI EN 1097-2) was equal to 25,
- the water absorption (UNI EN 1097-6) was equal to 2.09% by weight of the base mixture,
- leaching test values (IRSA CNR 1994) proved to be below the limits envisaged by annex 3 of the Ministerial Decree of February 5, 1998.

The granulometric analysis of the mixture gave the following results:

| Sieve opening (mm) | Total pass-through (mass %) |
|---|---|
| 25 | 100 |
| 15 | 97.3 |
| 10 | 90.6 |
| 5 | 69.4 |
| 2 | 43.3 |
| 0.4 | 12.7 |
| 0.180 | 7.7 |
| 0.075 | 5.4 |

The aggregates were mixed with a quantity of cement of type II/A-M 32.5R equal to 5% and with water in a quantity equal to 8% (weight percentages referring to the weight of the total inert materials present).

The conglomerate was subjected to the compression test at 7 days (UNI EN 12390-3). The maximum unitary resistance measured was equal to 4.82 MPa (average of the values obtained on 3 samples).

The conglomerate was subject to the indirect tensile "Brazilian" test at 7 days (UNI EN 12390-6). The maximum unitary resistance measured was equal to 0.42 MPa (average of the values obtained on 3 samples).

### EXAMPLE 2

A bituminous conglomerate was prepared starting from a mixture of inert materials having the following composition (weight percentages referring to the weight of total inert materials present):
I) 57.5% of crushed ceramic aggregates having dimensions of less than 4 mm;
II) 30% % of crushed ceramic aggregates having dimensions varying from 4 to 8 mm;
III) 12.5% of recycled asphalt;
IV) 5% of filler

Granulometric analysis of the above mixture gave the following results:

| Sieve opening (mm) | Total pass-through (mass %) |
|---|---|
| 15 | 100 |
| 10 | 98.4 |
| 5 | 54.8 |
| 2 | 39.2 |
| 0.4 | 18.2 |
| 0.180 | 11.5 |
| 0.075 | 8.5 |

The volumic mass of the mixture proved to be equal to 2.445 Kg/dm³.

In a first sample (sample 2A), the mixture of inert materials was mixed with 8% by weight of tar (percentage referring to the total weight of inert materials present) and 0.5% of a regenerating adhesion activating agent for tars (percentage referring to the weight of the tar).

In a second sample (sample 2B), the mixture of inert materials was mixed with 7.0% by weight of tar (percentage referring to the total weight of inert materials present) and 0.4% of a regenerating adhesion activating agent for tars (percentage referring to the weight of the tar).

The tar used for both samples had the following characteristics:
- penetration at 25°C (EN 1426) equal to 63 dmm;
- softening point (EN 1427): 48.0°C;
- penetration index (UNI 4163): -1.2.

The bituminous conglomerate was subjected to the Marshall test (CNR B.U. n. 30), by blending the mixture of inert products with the tar and adhesion activating agent at 155°C and compacting the pastes thus obtained at 145°C with 75 blows of the pestle per side. The results of the Marshall test are indicated in the following table together with the volumic mass and porosity:

| Sample (% bitumen) | Volumic mass (kg/dm³) | Stability (kN) | Slip (mm) | Porosity (%) * | Rigidity module (kN/mm) |
|---|---|---|---|---|---|
| 2A (8%) | 2.09 | 12.17 | 3.48 | 5.7 | 3.50 |
| 2B (7%) | 2.045 | 11.78 | 3.18 | 8.8 | 3.70 |

| | | | | | |
|---|---|---|---|---|---|
| * Corresponds to the volume percentage of cavities with respect to the total volume. The values were calculating assuming the average of two paraffined test-tubes as volumic mass and the value of 1.02 g/cm³ as density of the bituminous binder. | | | | | |

The sample 2A was also subjected to a Marshall test with the AASHTO T 166 method, which comprises immersion of the samples in water at 60°C for 24 hours. The results are indicated in the following table:

| Sample (% bitumen) | Volumic mass (kg/dm³) | Stability (kN) | Slip (mm) | Porosity (%) * | Rigidity module (kN/mm) |
|---|---|---|---|---|---|
| 2A (8%) | 2.09 | 10.71 | 3.28 | 5.5 | 3.26 |

The stability value measured after immersion in water is equal to 88% of the value of the corresponding sample before immersion.

The limited reduction in stability due to the prolonged washout (about 1 kN) is an index of the good adhesion between aggregates and tar and maintenance of these characteristics with time.

The bituminous conglomerates of this example are suitable for the production of surface wear paving for street pavements. For this type of wear surface, in fact, the requisites required are generally the following:
- Marshall stability higher than 11.0 kN;
- Marshall rigidity ranging from 3.5 to 4.5 kN/mm

## Claims

1. A bituminous conglomerate for the production of street paving comprising:
a) a mixture of inert materials comprising crushed ceramic aggregates coming from recovery process of baked ceramic rejects;
b) road tar, wherein the road tar is present in a quantity ranging from 3 to 9% by weight of the total inert aggregates present;
c) a tar regenerating adhesion activating agent, wherein the regenerating adhesion activating agent is present in a quantity ranging from 0.4 to 0.5% by weight with respect to the weight of the tar.

2. The bituminous conglomerate according to claim 1, also comprising recycled asphalt in a quantity ranging from 5 to 35% by weight with respect to the weight of the total inert aggregates present.

3. The bituminous conglomerate according to any of the claims from 1 to 2, wherein the quantity of crushed ceramic aggregates in the mixture of inert materials ranges from 0.1% to 100% by weight with respect to the weight of the total inert aggregates present.

4. The bituminous conglomerate according to any of the claims from 1 to 3, wherein the conventional aggregates are present in the mixture of inert materials in a variable quantity of up to 99.9% by weight with respect to the weight of the total inert aggregates present.

5. The bituminous conglomerate according to any of the claims from 1 to 4, comprising a quantity of filler ranging from 3 to 10% with respect to the weight of the total inert aggregates present.

## Patentansprüche

1. Bitumengemisch für die Erzeugung von Straßenbelag, umfassend:
a) ein Gemisch aus inerten Materialien, die zerkleinerte Keramikaggregate umfassen, die aus einem Rückgewinnungsprozess von gebrannten Keramikabfällen stammen;
b) Straßenteer, wobei der Straßenteer in einer Menge im Bereich von 3 bis 9 Gew.-% der gesamten vorhandenen inerten Aggregate vorhanden ist;
c) ein Teer regenerierendes, Adhäsion aktivierendes Mittel, wobei das regenerierende, Adhäsion aktivierende Mittel in einer Menge im Bereich von 0,4 bis 0,5 Gew.-% in Bezug auf das Gewicht des Teers vorhanden ist.

2. Bitumengemisch nach Anspruch 1, ebenfalls umfassend recycelten Asphalt in einer Menge im Bereich von 5 bis 35 Gew.-% mit Bezug auf das Gewicht der gesamten vorhandenen inerten Aggregate.

3. Bitumengemisch nach einem der Ansprüche 1 bis 2, wobei die Menge an zerkleinerten Keramikaggregaten in dem Gemisch von inerten Materialien im Bereich von 0,1 Gew.-% bis 100 Gew.-% mit Bezug auf das Gewicht der gesamten vorhandenen inerten Aggregate liegt.

4. Bitumengemisch nach einem der Ansprüche 1 bis 3, wobei die herkömmlichen Aggregate in dem Gemisch aus inerten Materialien in einer variablen Menge von bis zu 99,9 Gew.-% mit Bezug auf das Gewicht der gesamten vorhandenen inerten Aggregate vorhanden ist.

5. Bitumengemisch nach einem der Ansprüche 1 bis 4, mit einer Menge an Füllstoff im Bereich von 3 bis 10 % mit Bezug auf das Gewicht der gesamten vorhandenen inerten Aggregate.

## Revendications

1. Aggloméré bitumineux destiné à la production de dalles de rue, comprenant:
a) un mélange de matériaux inertes comprenant des agrégats de céramique broyés, provenant de la récupération de déchets de céramique cuits ;
b) du goudron routier, lequel goudron routier se trouve présent en une quantité représentant de 3 à 9 % du poids total des agrégats inertes présents ;
c) et un agent de régénération de goudron et d'activation d'adhérence, lequel agent de régénération de goudron et d'activation d'adhérence se trouve présent en une proportion de 0,4 à 0,5 %, en poids rapporté au poids du goudron.

2. Aggloméré bitumineux conforme à la revendication 1, qui comprend en outre un asphalte recyclé, présent en une proportion de 5 à 35 %, en poids rapporté au poids total des agrégats inertes présents.

3. Aggloméré bitumineux conforme à l'une des revendications 1 et 2, dans lequel la proportion des agrégats de céramique broyés dans le mélange de matériaux inertes vaut de 0,1 à 100 %, en poids rapporté au poids total des agrégats inertes présents.

4. Aggloméré bitumineux conforme à l'une des revendications 1 à 3, dans lequel il y a des agrégats classiques dans le mélange de matériaux inertes, en une proportion variable qui peut valoir jusqu'à 99,9 %, en poids rapporté au poids total des agrégats inertes présents.

5. Aggloméré bitumineux conforme à l'une des revendications 1 à 4, comprenant une charge en une proportion valant de 3 à 10 %, en poids rapporté au poids total des agrégats inertes présents.
